(19) Europäisches Patentamt
European Patent Office
Office européen des brevets

(11) EP 3 869 422 A1

(12) EUROPEAN PATENT APPLICATION

(43) Date of publication:
25.08.2021 Bulletin 2021/34

(51) Int Cl.:
G06N 20/00 (2019.01)

(21) Application number: 21154526.4

(22) Date of filing: 01.02.2021

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(30) Priority: 20.02.2020 JP 2020027097

(71) Applicant: FUJITSU LIMITED
Kanagawa 211-8588 (JP)

(72) Inventors:
• Sasamoto, Yuki
Kanagawa, 211-8588 (JP)
• Komaba, Yusuke
Kanagawa, 211-8588 (JP)
• Inomata, Akihiro
Kanagawa, 211-8588 (JP)
• Matsuoka, Naoki
Kanagawa, 211-8588 (JP)

(74) Representative: Hoffmann Eitle
Patent- und Rechtsanwälte PartmbB
Arabellastraße 30
81925 München (DE)

(54) MODEL UPDATE SUPPORT METHOD, MODEL UPDATE SUPPORT APPARATUS, AND MODEL UPDATE SUPPORT PROGRAM

(57) A model update support method includes generating, by a computer, a difference model that represents a difference between a first index regarding an output obtained when evaluation data is inputted to a first model and a second index regarding an output obtained when the evaluation data is inputted to a second model, and identifying a level of influence to be exerted by update of the first model with the second model, based on the difference model and input data accumulated in a field where the first model is used.

FIG. 1

EP 3 869 422 A1

**Description**

FIELD

The embodiments discussed herein are related to a model update support method, a model update support apparatus, and a model update support program.

BACKGROUND

With the rapid advance of digital technology in recent years, digital transformation (DX), which transforms existing businesses and business operations using new technology, is drawing attention. Toward the achievement of DX, there are expectations for new services utilizing data obtained by collection of various events in existing business operations. As one of such services, data analysis services using technology such as artificial intelligence (AI) and machine learning have been created in various industries. Examples of such data analysis services include a diagnosis and prediction service for factories or the like, a behavior analysis service targeting suspicious individuals and the like for police, and a gait analysis service targeting patients for hospitals.

The above services face challenges of stability and reliability in performance, operation, and running as services, such as problems in a guarantee of reproducibility because results may change depending on the data handled, or difficulty in identifying the cause of a problem occurring because the processing is a black box. To overcome such challenges, a concept of MLOps has been put forward and several techniques have been developed for a performance guarantee in AI or machine learning and smooth operation and running.

For example, there has been proposed a technique for managing histories of training data (input), a model (processing), and a result (accuracy). This technique manages inputs, accuracies, and processing performed on the inputs by linking them all together, to be able to keep track of the performance and reproducibility of the model.

There has also been proposed a technique that facilitates identification of the cause of a problem occurring, by configuring the architecture for service provision in such a manner that functions which have heretofore been included together in a business logic part are divided into business logic and logic related to data processing.

There has also been proposed a prediction model update system that evaluates the closeness in properties between a prediction model after re-learning and a prediction model before re-learning. This system updates the prediction model before re-learning with the prediction model after re-learning if the closeness in properties satisfies the closeness defined by a predetermined condition. As the closeness in properties between prediction models, this system evaluates closeness in prediction results or closeness in structures.

Related techniques are disclosed in, for example, International Publication Pamphlet No. WO 2016/151618.

Related techniques are also disclosed in, for example: Nisha Talagala, "Why MLOps (and not just ML) is your Business' New Competitive Frontier", AITrends, January 30, 2018, https://www.aitrends.com/machine-learning/mlops-not-just-ml-business-new-competitive-frontier/; D. Petrov, "Data Science Version Control System", 2018, http://dvc.org; and H. Yokoyama, "Machine Learning System Architectural Pattern for Improving Operational Stability", IEEE International Conference on Software Architecture Companion (ICSA-C), 2019.

However, even if technology based on the concept of MLOps described above is used for a trained model applied to a service in order to achieve a performance guarantee in AI or machine learning or to achieve smooth operation and running, the following problems may arise.

First, in an actual scene where a model is applied to a service, references such as correct answers are not prepared in advance for all the data. Thus, correct answers for data outputted from the model as an error are collected, and the model is updated using the data that have come out as an error and the collected correct answers. For example, correct answers are not collected for data that have been processed properly in a pre-update model, and such data is not used in model update. Thus, updating the model may have an adverse influence on data that has been processed properly in the pre-update model.

In a case where the same model is used in two or more fields, data used for the service using the model are collected in each of the fields and are therefore different from one field to another. For this reason, in a case where the same model is used in two or more fields, it is desirable that an influence exerted by an update of the model be determined on a field by field basis.

In one aspect, the technique disclosed herein has an object to identify an influence exerted by model update for each field according to inputs in the field.

SUMMARY

According to an aspect of the embodiments, a model update support method includes generating, by a computer, a difference model that represents a difference between a first index regarding an output obtained when evaluation data is inputted to a first model and a second index regarding an output obtained when the evaluation data is inputted to a second model, and identifying a level of influence to be exerted by update of the first model with the second model, based on the difference model and input data accumulated in a field where the first model is used.

In one aspect, the technique disclosed herein is advantageously able to identify the level of influence to be exerted on each field by model update according to inputs made in the field.

BRIEF DESCRIPTION OF DRAWINGS

FIG. 1 is a block diagram illustrating a configuration of an information processing system.
FIG. 2 is a functional block diagram of a model generation apparatus.
FIG. 3 is a diagram illustrating an example of an evaluation data set.
FIG. 4 is a functional block diagram of an operation apparatus.
FIG. 5 is a diagram illustrating a general flow of a development stage, an operation stage, and an adjustment stage of a model.
FIG. 6 is a diagram illustrating a problem caused by model update.
FIG. 7 is a diagram illustrating actual input data in each field.
FIG. 8 is a functional block diagram of a model update support apparatus.
FIG. 9 is a diagram illustrating generation of an index model.
FIG. 10 is a diagram illustrating generation of a difference model.
FIG. 11 is a diagram illustrating identification of a level of influence.
FIG. 12 is a diagram illustrating an example of a dashboard for presenting a level of influence.
FIG. 13 is a diagram illustrating an example of a dashboard for presenting a level of influence.
FIG. 14 is a block diagram illustrating a configuration of a computer that functions as a model update support apparatus.
FIG. 15 is a flowchart illustrating an example of model generation processing.
FIG. 16 is a flowchart illustrating an example of operation processing.
FIG. 17 is a flowchart illustrating an example of model update support processing.
FIG. 18 is a flowchart illustrating an example of difference model generation processing.
FIG. 19 is a flowchart illustrating an example of influence level identification processing according to a first embodiment.
FIG. 20 is a flowchart illustrating an example of presentation and reception processing.
FIG. 21 is a flowchart illustrating an example of influence level identification processing according to a second embodiment.
FIG. 22 is a diagram illustrating a difference in index corresponding to actual input data in a difference model.
FIG. 23 is a diagram illustrating rearrangement of evaluation data in an index model.

DESCRIPTION OF EMBODIMENTS

With reference to the drawings, embodiments according to the technique disclosed herein will be described below.

<First Embodiment>

An information processing system according to a first embodiment provides a predetermined service using a trained model. An example of a service provided by an information processing system discussed in the first embodiment is a gait analysis service used in a medical facility such as a hospital. For example, a gait analysis service analyzes sensor data detected by a gyro sensor that a subject, such as a patient, wears on their ankle or elsewhere, and estimates their gait characteristics such as the number of footsteps and stride period. The estimation of the gait characteristics based on the sensor data uses a trained model.

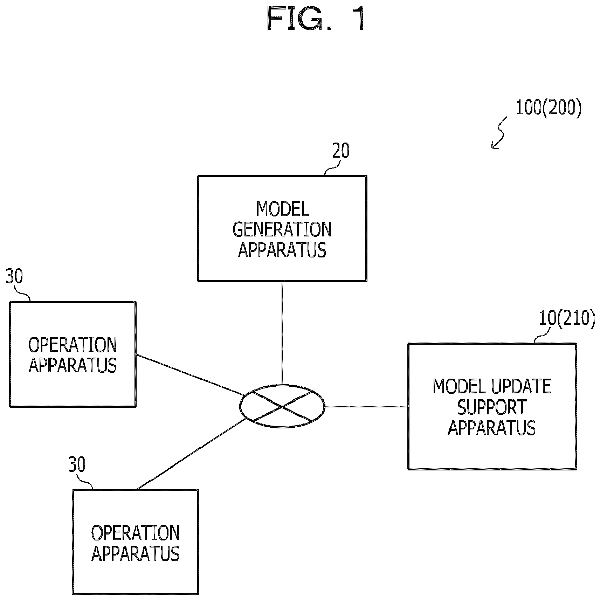

As illustrated in FIG. 1, an information processing system 100 includes a model update support apparatus 10, a model generation apparatus 20, and a plurality of operation apparatuses 30. The number of operation apparatuses 30 is not limited to the example illustrated in FIG. 1 (which is two), and there may be three or more operation apparatuses 30.

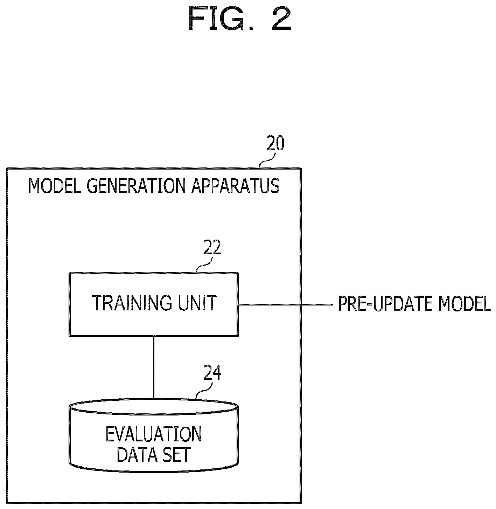

As illustrated in FIG. 2, the model generation apparatus 20 functionally includes a training unit 22. An evaluation data set 24 is stored in a predetermined storage area in the model generation apparatus 20.

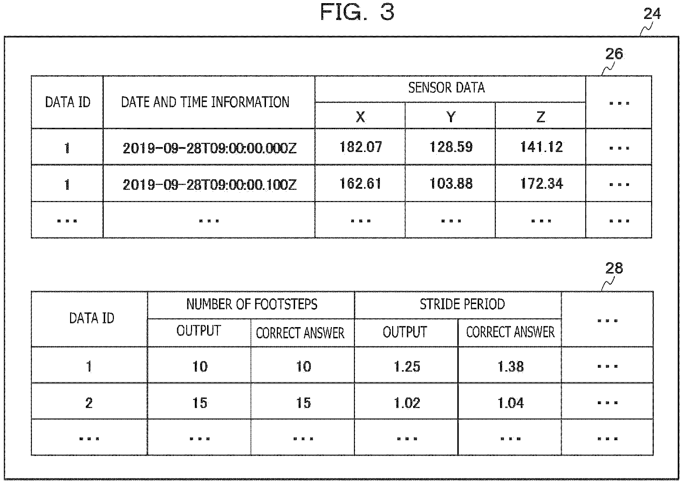

FIG. 3 illustrates an example of the evaluation data set 24. In the example in FIG. 3, the evaluation data set 24 includes an evaluation data table 26 and an output-correct answer data table 28. The evaluation data table 26 stores sensor data values in respective sections in the chronological sensor data detected by the gyro sensor worn by the subject. The sections represent walk sections. In the example in FIG. 3, "SENSOR DATA" are stored in association with "DATE AND TIME INFORMATION" AND "DATA ID". "SENSOR DATA" are angular velocities for the respective X, Y, and Z axes detected by the gyro sensor. "DATE AND TIME INFORMATION" indicates the date and time of detection of the sensor data. "DATA ID" is identification information on each walk section.

The output-correct answer data table 28 stores a gait characteristic which is an output obtained from a model when sensor data for a certain walk section is inputted to the model in association with a correct gait characteristic for the sensor data. The correct gait characteristic is a value indicating an actual gait characteristic, which value may be derived from, for example, data acquired by having a subject walk on a mat equipped with a pressure sensor. In the example in FIG. 3, "OUTPUT" and "CORRECT ANSWER" of each of "NUMBER OF FOOTSTEPS" and "STRIDE PERIOD" are stored in association with "DATA ID" of sensor data in each walk section. "NUMBER OF FOOTSTEPS" and "STRIDE PERIOD" are examples of a gait characteristic.

The training unit 22 pairs up evaluation data with a correct answer in each walk section and uses the paired data as training data. The evaluation data is a group of data, namely "DATE AND TIME INFORMATION" and "SENSOR DATA", associated with the same "DATA ID" in the evaluation data table 26 in the evaluation data set 24. The correct answer is the data in "CORRECT ANSWER" associated with the corresponding "DATA ID" in the output-correct answer data table 28. The training unit 22 generates a model by inputting training data to a model having a structure suitable for the service provided by the information processing system 100 and learning parameters of the model so that an output from the model approximates to the correct answer.

The training unit 22 inputs evaluation data in each walk section to the generated model and obtains a gait characteristic as an output. In the output-correct answer data table 28, the training unit 22 stores the value of the obtained output in a cell under "OUTPUT" corresponding to the "DATA ID" of the walk section indicated by the evaluation data inputted. The training unit 22 distributes the generated model to the operation apparatuses 30. The distribution method may be distribution via a network or distribution of recording media storing the model. For explanatory convenience, the model distributed from the model generation apparatus 20 to the operation apparatuses 30 is referred to as a "pre-update model" herein.

The operation apparatus 30 is placed in each field where the service provided by the information processing system 100 is used. In the first embodiment, each field is a medical facility such as, for example, a public hospital, a private hospital, or a private clinic.

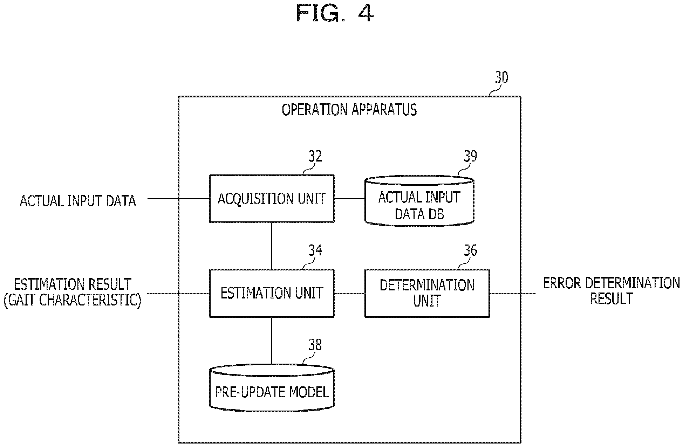

As illustrated in FIG. 4, the operation apparatus 30 functionally includes an acquisition unit 32, an estimation unit 34, and a determination unit 36. In a predetermined storage area of the operation apparatus 30, a pre-update model 38 distributed from the model generation apparatus 20 and an actual input data database (DB) 39 are stored.

The acquisition unit 32 acquires actual input data in the field. The actual input data is data in each walk section extracted from sensor data detected by a gyro sensor worn on the ankle or elsewhere of a subject such as a patient. The acquisition unit 32 assigns a data ID to the acquired actual input data, passes the actual input data to the estimation unit 34, and stores the actual input data in the actual input data DB 39. The actual input data DB 39 has a data structure similar to that of the evaluation data table 26 in the evaluation data set 24 illustrated in FIG. 3.

The estimation unit 34 inputs the actual input data received from the acquisition unit 32 to the pre-update model 38, estimates a gait characteristic corresponding to the actual input data, and outputs the gait characteristic. The gait characteristic thus outputted is used for abnormal gait detection and the like. The estimation unit 34 passes the gait characteristic outputted from the pre-update model 38, to the determination unit 36.

The determination unit 36 determines whether the gait characteristic received from the estimation unit 34 is a proper estimation result, or for example, determines whether the estimation result is an error. For example, the determination unit 36 predetermines a proper value range for each type of gait characteristics, and determines that the estimation result is an error if the gait characteristic exceeds this range. The determination unit 36 may be configured to present the obtained gait characteristic and the inputted actual input data to a user and receive whether the estimation result is an error from the user. If determining that the estimation result is an error, the determination unit 36 outputs the actual input data in question to the model update support apparatus 10 as error data to request model adjustment.

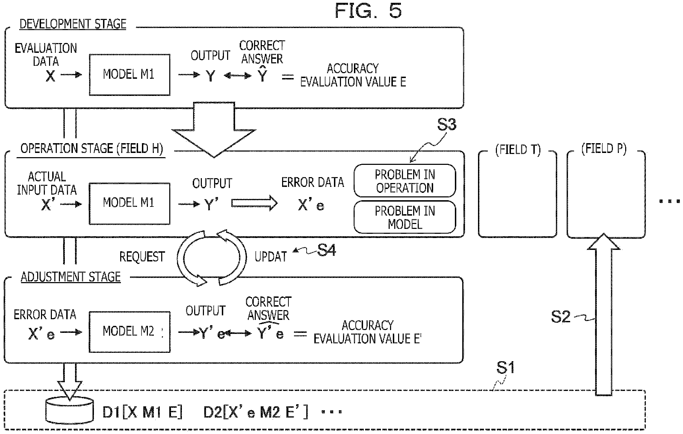

With reference to FIG. 5, a description is given of a general flow of a development stage, an operation stage, and an adjustment stage of a model. In the development stage, an output Y obtained when evaluation data X is inputted to a model is compared with a correct answer Y^ (in FIG. 5, "^ (hat)" over Y), and an accuracy evaluation value E of the model is calculated. For example, the sum of errors between outputs and correct answers of all the pieces of training data used for the model training may be calculated as the accuracy evaluation value E. The model generated in the development stage is referred to as a model M1 herein.

In the operation stage, actual input data X' is inputted to the model M1, and an output Y' is obtained as an estimation result. If this output Y' is determined to be an error, the corresponding actual input data X' is set to error data X'e. Adjustment of the model is requested so that a proper estimation result may be obtained even if this error data X'e is inputted.

In the adjustment stage, an output Y'e obtained when the error data X'e is inputted to a model in which the parameter set has been adjusted is compared with a correct answer Y'e^, and an accuracy evaluation value E' is calculated. A model defined by the parameter set with which the accuracy evaluation value E' satisfies a predetermined condition is referred to as a model M2 herein. The model M1 in each field is then updated with the model M2.

In this event, use of a technique based on the concept of MLOps described above enables, for example, an input, a model, and an accuracy evaluation value to be linked, accumulated, and managed for each of the model M1 and the model M2 (S1 in FIG. 5) and to be reused in other fields (S2 in FIG. 5). For example, whether an error has occurred because of an operational problem, a problem in the model, or the like may be identified. If the error is due to a problem in the model, a request for adjustment may be issued (S3 in FIG. 5). For example, it may be determined whether to update the model M1 with the model M2 according to the closeness in properties, such as an input and an output, between the model M1 and the model M2 (S4 in FIG. 5).

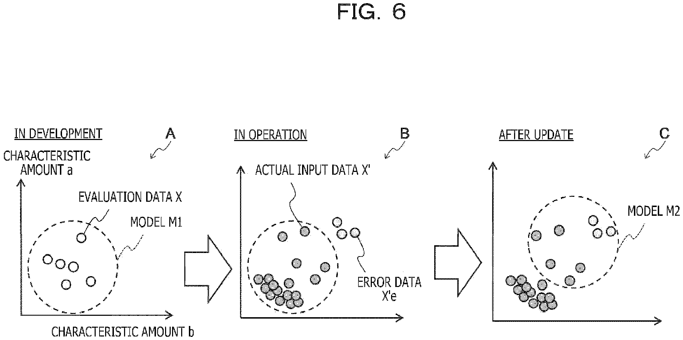

However, use of the above-described technique based on the concept of MLOps may still pose a problem of not being able to determine an influence that the update of the model will have on each field. Hereinbelow, a detailed description is given of this problem with reference to FIG. 6. FIG. 6 depicts the evaluation data X with blank circles, the actual input data X' with hatched circles, and the error data X'e with dotted circles in a characteristics space of sensor data, and the boundary of a model is indicated with a broken line.

For example, in a case of a gait analysis service, the model M1 capable of widely supporting various types of abnormal gait is constructed in the development stage, as illustrated in A in FIG. 6. The model M1 is thereafter operated in field H, and it is assumed here that there is a report of an error that, for example, an abnormal gait I seen in orthopedic patients is undetectable. This means that when the error data X'e illustrated in B in FIG. 6 is inputted to the model M1, a gait characteristic indicating the abnormal gait I which is supposed to be estimated is not estimated. In this case, as illustrated in C in FIG. 6, the model M1 is updated with the model M2 which has been adjusted to optimize the parameters by adaption to the error data X'e.

Assume in this case that there are actually many neurotic patients in this field H, and that an abnormal gait II, which greatly differs in characteristics from the abnormal gait I, is frequently seen. However, since there is no problem concerning the abnormal gait II at the time when the error is reported, the abnormal gait II is not taken into consideration for parameter adjustment. The model is therefore optimized so that the abnormal gait I may be properly estimated, resulting in a situation where part of the abnormal gait II fails to be estimated, which is a negative influence. In C in FIG. 6, actual input data X' which is now outside the boundary of the model M2 is actual input data corresponding to the abnormal gait II. In this case, the model adjustment has to be conducted again to enable proper estimation of the abnormal gait II as well, requiring more time and effort.

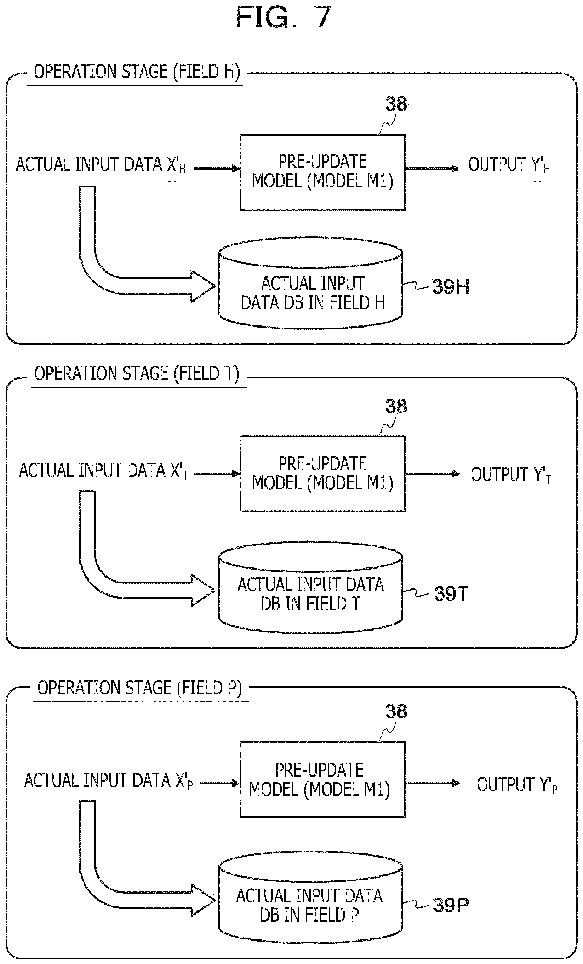

For example, it is assumed here that, as illustrated in FIG. 7, the same model M1 has been distributed as the pre-update model 38 to the operation apparatuses 30 in field H, field T, and field P. Although the same model M1 is used, the actual input data X' inputted to the model M1 is different in each field. The reference signs in the example in FIG. 7 end with a letter H, T, or P to identify the field.

In the above-described situation, it is assumed that field T, which operates using the same model M1 as field H, has reported no error like the one reported by field H. If the model M1 is updated with the model M2 in this case, there is a possibility that field T, which has heretofore been operated properly with the model M1, experiences an unexpected error due to the model update.

In this respect, the model update support apparatus 10 according to the first embodiment identifies an influence to be exerted by model update by focusing on a change in the relation between an input and an index due to the model update. The relation between an input and an index is, when the index is an error in an output, a relation such that an error in an output obtained in response to a certain input A is 0.1, or the like. A change in the relation between an input and an index is, for example, an error in an output which is originally 0.1 changing to 0.2 due to model update. To identify an influence to be exerted by model update is, conceptually, to identify if, for example, an index for an input A has greatly decreased, an index for an input B has increased, or the like due to model update.

The model update support apparatus 10 according to the first embodiment identifies an influence to be exerted on each field by model update, focusing on a similarity between evaluation data and actual input data in the field. For example, the model update support apparatus 10 identifies that the model update will have a great influence on, or may cause a problem in, a field that frequently sees inputs similar to an input A the index related to which is changed greatly by the model update.

A detailed description will be given below of the model update support apparatus 10.

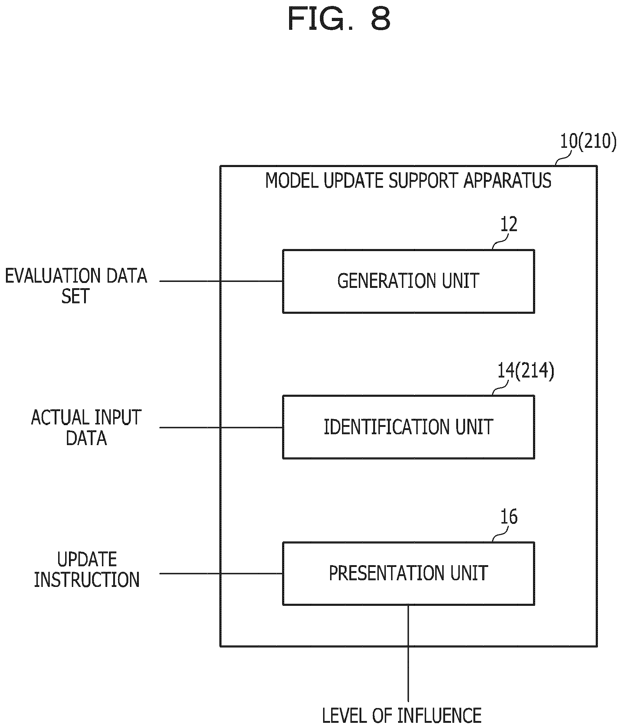

The model update support apparatus 10 functionally includes, as illustrated in FIG. 8, a generation unit 12, an identification unit 14, and a presentation unit 16.

The generation unit 12 generates a difference model representing the difference between an index regarding an output obtained by inputting evaluation data to the pre-update model 38 and an index regarding an output obtained by inputting the evaluation data to a candidate for a post-update model (hereinafter referred to as an "update candidate model"). The pre-update model is an example of the first model in the technique disclosed herein, and the update candidate model is an example of the second model in the technique disclosed herein.

For example, the generation unit 12 acquires the evaluation data set 24 from the model generation apparatus 20, and calculates an index for each walk section by comparing an output and a correct answer of a gait characteristic included in the output-correct answer data table 28. For example, in a case of a model that outputs an estimation result corresponding to a characteristic indicated by data inputted, the generation unit 12 may calculate, as an index, an error between an output and an expected value (correct answer) from each of the pre-update model 38 and an update candidate model. For example, in a case of calculating a risk value based on an output obtained in response to data inputted to a model, the generation unit 12 may use the calculated risk value as an index.

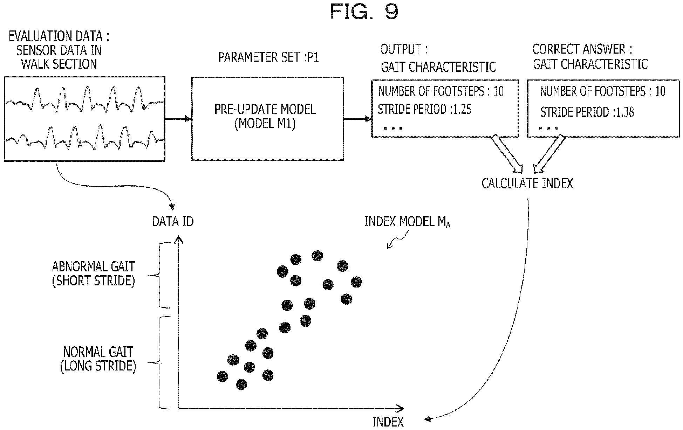

For example, as illustrated in FIG. 9, the generation unit 12 generates an index model $M_A$ in which an index for each walk section is associated with the data ID of the walk section or with a characteristic amount indicated by the data for the walk section. As illustrated in FIG. 9, the index model $M_A$ is a model indicating the relation between an input to a model and an index of an output obtained in response to the input. In the index model $M_A$ illustrated in FIG. 9, whether a gait indicated by sensor data in a walk section indicated by a data ID is an abnormal gait or a normal gait is divided based on the data ID. When there are a plurality of types of gait characteristics (such as the number of footsteps and a stride distance) outputted from a model as in the first embodiment, the generation unit 12 may select an index concerning one of the gait characteristics and use the selected index for the generation of the index model $M_A$. The generation unit 12 may sum up indices calculated for the respective gait characteristics and use the sum for the generation of the index model $M_A$.

The generation unit 12 calculates an accuracy evaluation value of each of update candidate models defined by their respective parameter sets, and selects one or more update candidate models the accuracy evaluation value for which is equal to or greater than a predetermined threshold. For each update candidate model selected, the generation unit 12 calculates an index based on an output obtained by input of evaluation data and its correct answer, and generates an index model $M_B$ in a similar manner as the above-described index model $M_A$. The index model $M_A$ is an example of the first index model in the technique disclosed herein, and the index model $M_B$ is an example of the second index model in the technique disclosed herein.

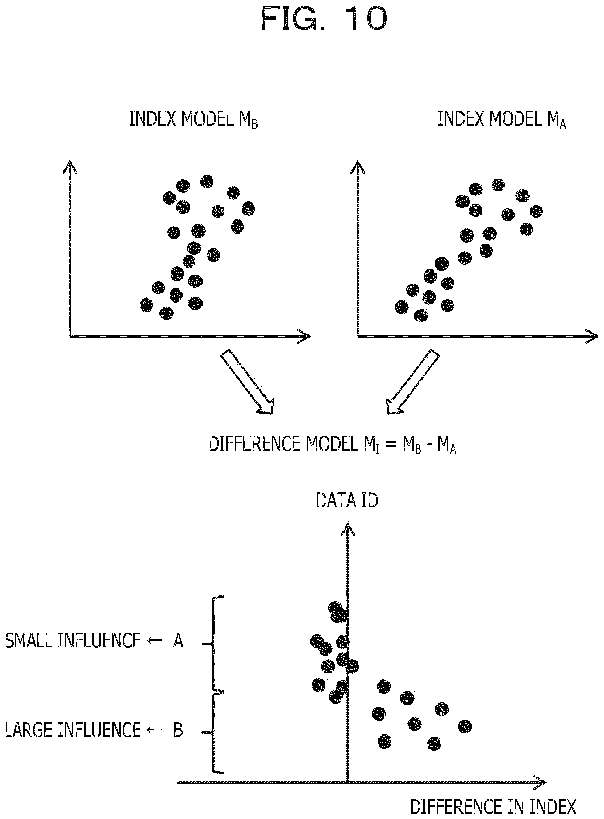

Based on the index model $M_A$ and the index model $M_B$, the generation unit 12 generates a difference model $M_I$ in which the difference between indices is associated with data in each walk section, as illustrated in FIG. 10. The difference model $M_I$ is a model indicating a change in index for an input due to model update. The example in FIG. 10 represents that an input within a range with a small change in index (the range denoted by A) is influenced by model update to a small degree, while an input within a range with a large change in index (the range denoted by B) is influenced by model update to a large degree.

The identification unit 14 identifies a level of influence exerted by an update of the pre-update model 38 with an update candidate model, based on the difference model and actual input data accumulated in the operation apparatus 30 employing the pre-update model 38.

For example, in a case where an error between an output and a correct answer is used as an index, the identification unit 14 identifies a level of influence $M_I(x_{ij})$ for the j-th actual input data $x_{ij}$ in a field i using Formula (1) below.

$$M_I(x_{ij}) = d(\tau_j) \qquad \cdots (1)$$

$$d(n) = \left(y'_n - \widehat{y_n}\right)^2 - (y_n - \widehat{y_n})^2 \qquad \tau_j = \operatorname*{argmin}_k\left((x_{ij} - x_k)\right)$$

*where*

In Formula (1), $x_k$ is the k-th evaluation data, and $\tau_j$ is the data ID of evaluation data closest to the actual input data $x_{ij}$. In Formula (1), $y_n$ is an output from the pre-update model 38 obtained in response to the n-th evaluation data, $y'_n$ is an output from the update candidate model obtained in response to the n-th evaluation data, and $y_n^\wedge$ is the correct answer for the n-th evaluation data.

For example, in a case where a risk value calculated based on an output from a model is used as an index, the identification unit 14 identifies the level of influence $M_I(x_{ij})$ using Formula (2) below.

$$M_I(x_{ij}) = R(\tau_j) \qquad \cdots (2)$$

$$\tau_j = \operatorname*{argmin}_k \left( (x_{ij} - x_k) \right)$$

*where R(n) = r'_n - r_n*

In Formula (2), $r_n$ is a risk value calculated based on an output from the pre-update model 38 obtained in response to the n-th evaluation data, and $r'_n$ is a risk value calculated based on an output from the update candidate model obtained in response to the n-th evaluation data.

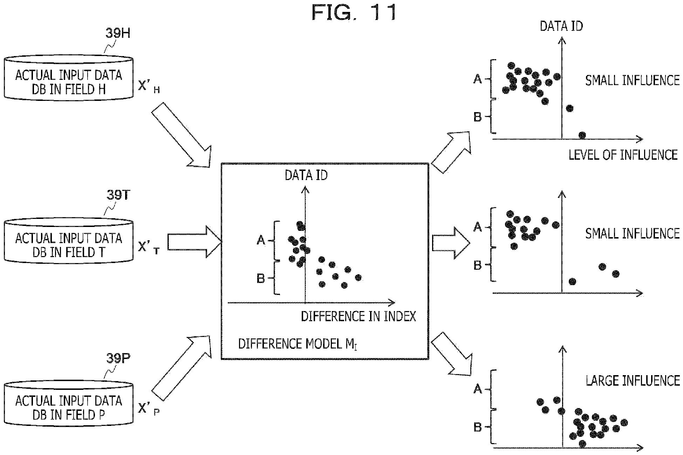

For example, the identification unit 14 acquires actual input data stored in the actual input data DB 39 in each of the operation apparatuses 30 employing the pre-update model 38 to be updated, as illustrated in FIG. 11. The identification unit 14 inputs the acquired actual input data $x_{ij}$ to the difference model $M_l$ as represented in Formula (1) or (2) above, and identifies the level of influence $M_l(x_{ij})$ for the actual input data $x_{ij}$.

Graphs plotting the level of influence $M_l(x_{ij})$ for the actual input data $x_{ij}$ are depicted on the right side of FIG. 11. If Formula (1) or (2) above is used, the level of influence being negative means that the accuracy is improved by the model update, and therefore it may be determined that the model update has a small influence. In the example in FIG. 11, fields H and T have many inputs within the range denoted by A (for example, inputs indicative of an abnormal gait), and the level of influence on the inputs within this range is negative. Thus, the model update has a small influence on fields H and T. Field P, by contrast, has many inputs within the range denoted by B where high levels of influence have been identified (for example, inputs indicative of a normal gait), and is therefore influenced greatly by the model update.

Instead of or in addition to the level of influence $M_l(x_{ij})$ for each actual input data $x_{ij}$, the identification unit 14 may identify a total level of influence $I_i$ on each field i. The level of influence $I_i$ may be identified using, for example, Formula (3) below.

$$I_i = \sum_{j=1}^{N} M_l(x_{ij}) \qquad \cdots (3)$$

In Formula (3), N is the number of pieces of actual input data acquired from the operation apparatus 30 in the field i. The level of influence $I_i$ for the field i may be identified not only with the sum of the levels of influence $M_l(x_{ij})$ of all pieces of actual input data as represented in Formula (3) above, but also with the sum of the levels of influence $M_l(x_{ij})$ of pieces of actual input data within a predetermined range. For example, the level of influence $I_i$ may be identified for each of the range denoted by A and the range denoted by B illustrated in FIGs. 10 and 11. If two or more models are selected as the update candidate model, the identification unit 14 identifies, for each of the update candidate models, the level of influence to be exerted when the pre-update model 38 is updated with that update candidate model. The identification unit 14 passes information on the level of influence identified to the presentation unit 16.

The presentation unit 16 presents the level of influence identified by the identification unit 14 to a user, and receives whether to update the pre-update model 38 with the update candidate model, on a field by field basis. For example, the presentation unit 16 may present a graph plotting the levels of influence against actual input data of each field like the ones on the right side of FIG. 11, or the value of the level of influence $I_i$.

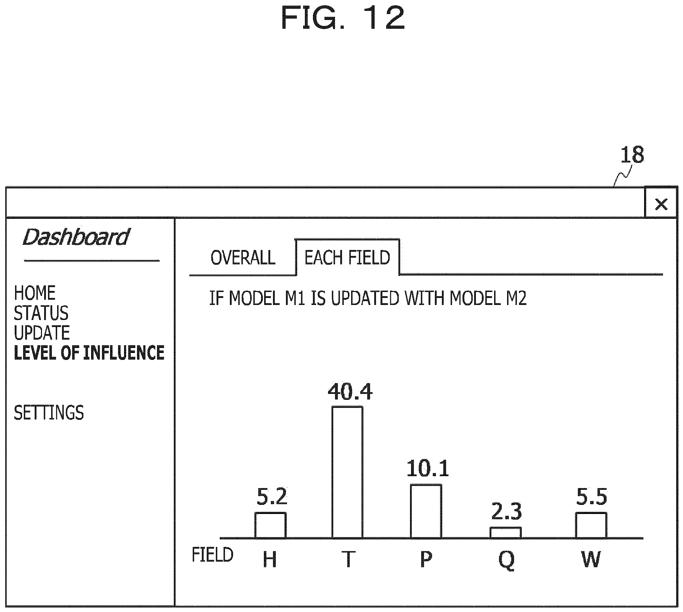

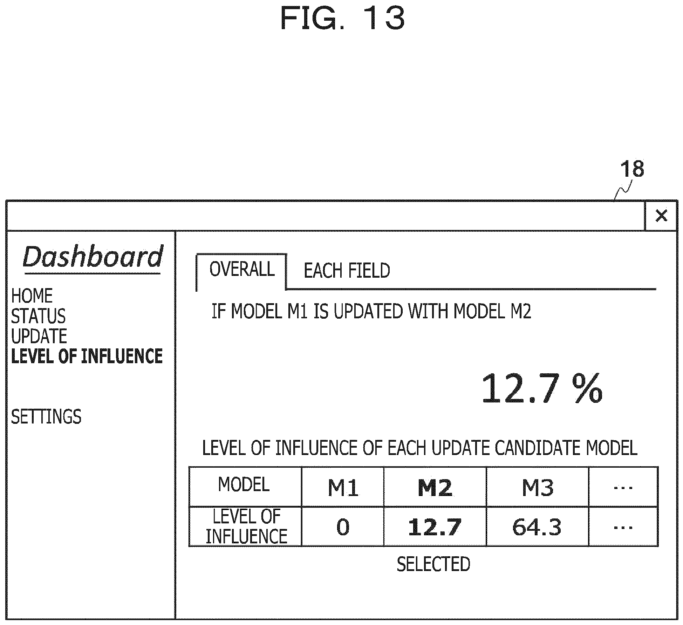

The presentation unit 16 may also present the levels of influence identified for the respective fields by means of, for example, a dashboard 18 illustrated in FIG. 12. The value of the level of influence presented may be a value having been subjected to normalization or the like if deemed appropriate. In the example illustrated in FIG. 12, the levels of influence for the fields are represented using a bar graph. The dashboard 18 may be designed so that an "each field" tab and an "overall" tab are switchable, and when the "overall" tab is selected, the presentation unit 16 may present, as illustrated in FIG. 13, the total level of influence of fields employing the same pre-update model 38. FIG. 13 depicts an example where the level of influence has been identified for each of the models M2 and M3 as update candidate models, and the model M2 is being selected.

The presentation unit 16 receives designation of a field to update the model from the user, distributes the update candidate model to the operation apparatus 30 installed in the designated field, and instructs an update. Thereby, the pre-update model 38 is updated with the update candidate model in the corresponding operation apparatus 30.

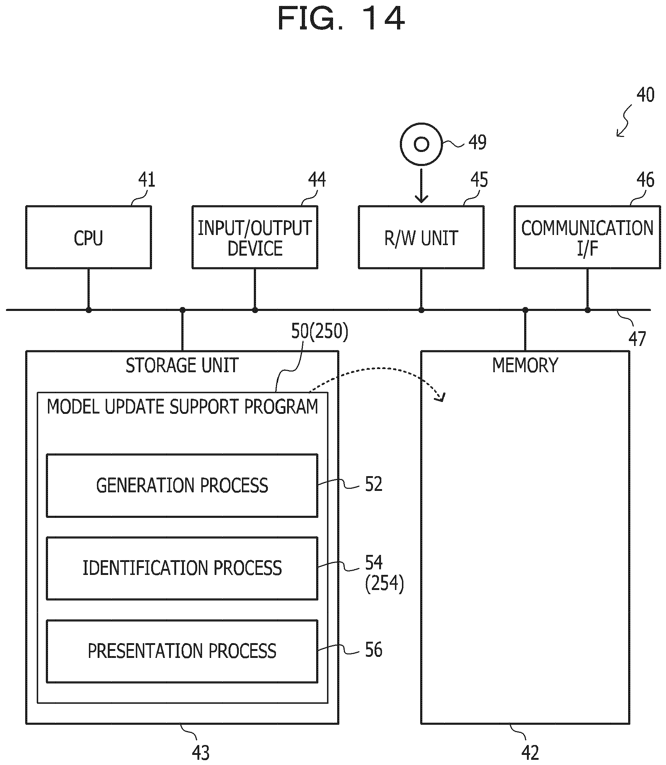

The model update support apparatus 10 may be implemented by, for example, a computer 40 illustrated in FIG. 14. The computer 40 includes a central processing unit (CPU) 41, memory 42 as a temporary storage area, and a nonvolatile storage unit 43. The computer 40 also includes an input/output device 44 such as an input unit and a display unit, and a read/write (R/W) unit 45 that controls reading and writing of data from and to a storage medium 49. The computer 40 also includes a communication interface (I/F) 46 coupled to a network such as the Internet. The CPU 41, the memory 42, the storage unit 43, the input/output device 44, the R/W unit 45, and the communication I/F 46 are coupled to each other via a bus 47.

The storage unit 43 may be implemented by a hard disk drive (HDD), a solid-state drive (SSD), a flash memory, or the like. The storage unit 43 serving as a storage medium stores a model update support program 50 for causing the computer 40 to function as the model update support apparatus 10. The model update support program 50 has a generation process 52, an identification process 54, and a presentation process 56.

The CPU 41 reads the model update support program 50 from the storage unit 43, loads the model update support program 50 into the memory 42, and executes the processes in the model update support program 50 sequentially. The CPU 41 operates as the generation unit 12 illustrated in FIG. 8 by executing the generation process 52. The CPU 41 operates as the identification unit 14 illustrated in FIG. 8 by executing the identification process 54. The CPU 41 operates as the presentation unit 16 illustrated in FIG. 8 by executing the presentation process 56. The computer 40 executing the model update support program 50 thus functions as the model update support apparatus 10. The CPU 41 that executes the program is hardware.

The functions implemented by the model update support program 50 may also be implemented by, for example, a semiconductor integrated circuit, or more specifically, an application-specific integrated circuit (ASIC) or the like.

Like the model update support apparatus 10, each of the model generation apparatus 20 and the operation apparatus 30 may also be implemented by a computer including a CPU, memory, a storage unit, and the like, and therefore a detailed description is omitted here.

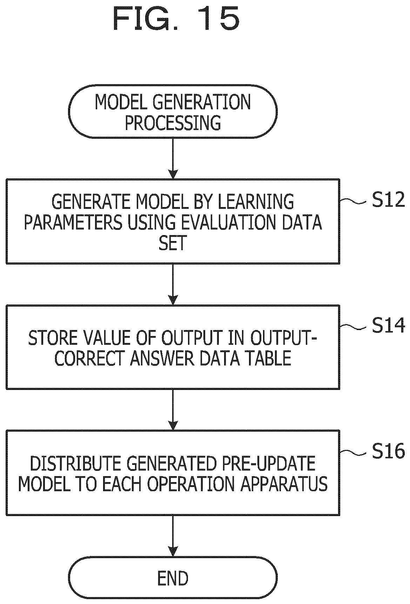

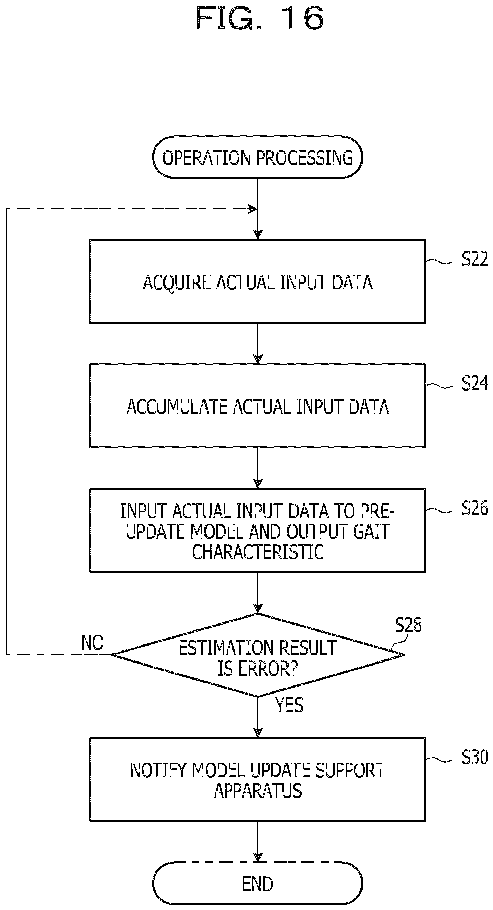

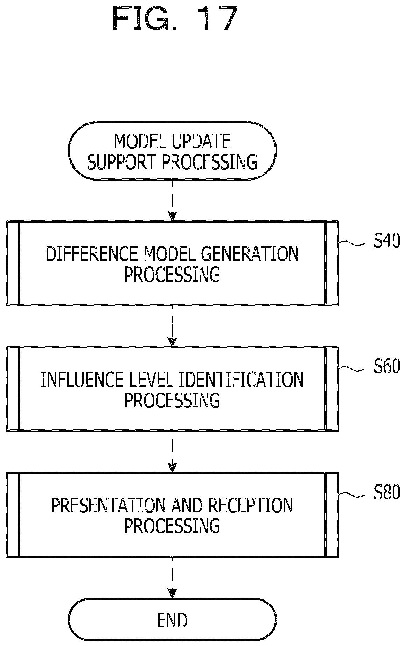

Next, a description is given of how the information processing system 100 according to the first embodiment works. First, in the development stage of the pre-update model 38, the model generation apparatus 20 executes model generation processing illustrated in FIG. 15. Then, in the operation stage, each operation apparatus 30 executes operation processing illustrated in FIG. 16. If any of the fields requests adjustment of the pre-update model 38 during operation of the service employing the pre-update model 38, the model update support apparatus 10 executes model update support processing illustrated in FIG. 17. The model update support processing is an example of the model update support method of the technique disclosed herein.

First, the model generation processing illustrated in FIG. 15 is described.

In Step S12, the training unit 22 acquires evaluation data in each walk section stored in the evaluation data table 26 in the evaluation data set 24, the evaluation data being a group of data including "DATE AND TIME INFORMATION" and "SENSOR DATA" associated with the same "DATA ID". The training unit 22 also acquires data in "CORRECT ANSWER" associated with the "DATA ID" in the output-correct answer data table 28. The training unit 22 generates a pre-update model by using training data, which are pairs of evaluation data and correct answers, and learning parameters of a model having a structure suitable for the service provided by the information processing system 100 so that an output and a correct answer may approximate to each other.

Next, in Step S14, the training unit 22 inputs evaluation data in each walk section to the pre-update model defined by predetermined structure data and a parameter set learned in Step S12 above, and obtains a gait characteristic as an output. In the output-correct answer data table 28 in the evaluation data set 24, the training unit 22 stores the value of the obtained output in a cell under "OUTPUT" corresponding to the "DATA ID" of the walk section indicated by the evaluation data inputted to the pre-update model 38.

Next, in Step S16, the training unit 22 distributes the generated pre-update model 38 to each operation apparatus 30, and the model generation processing ends.

Next, the operation processing is described with reference to FIG. 16. The operation processing is performed by each of the operation apparatuses 30 placed in respective fields.

In Step S22, the acquisition unit 32 acquires actual input data which is data in a walk section extracted from sensor data detected by a gyro sensor worn on the ankle or elsewhere of a subject such as a patient. The acquisition unit 32 assigns a data ID to the actual input data acquired, and passes the actual input data to the estimation unit 34.

Next, in Step S24, the acquisition unit 32 stores the actual input data assigned with the data ID in the actual input data DB 39.

Next, in Step S26, the estimation unit 34 inputs the actual input data received from the acquisition unit 32 to the pre-update model 38, estimates a gait characteristic corresponding to the actual input data, and outputs the gait characteristic. The estimation unit 34 passes the gait characteristic outputted from the pre-update model 38, to the determination unit 36.

Next, in Step S28, the determination unit 36 determines whether the gait characteristic received from the estimation unit 34 is a proper estimation result, or for example, whether the estimation result is an error. The processing proceeds to Step S30 if the estimation result is an error, and proceeds back to Step S22 if the estimation result is not an error.

In Step S30, the determination unit 36 outputs the actual input data the estimation result for which has been determined to be an error to the model update support apparatus 10 as error data, requesting model adjustment. The operation processing then ends.

Next, the model update support processing is described with reference to FIG. 17.

In Step S40, the generation unit 12 executes difference model generation processing. Next, in Step S60, the identification unit 14 executes influence level identification processing. Next, in Step S80, the presentation unit 16 executes presentation and reception processing, and the model update support processing ends. Hereinbelow, detailed descriptions are given of the difference model generation processing, the influence level identification processing, and the presentation and reception processing.

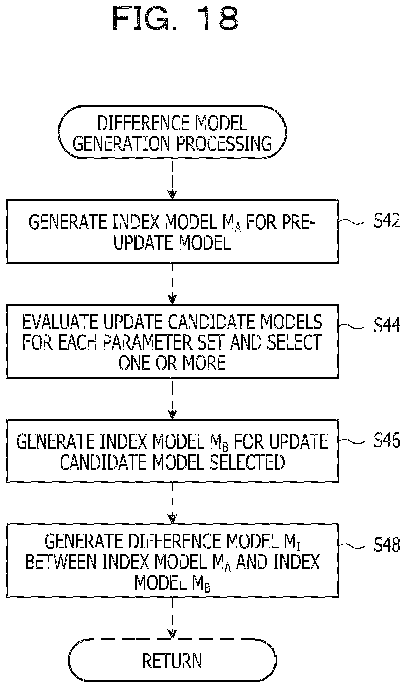

First, the difference model generation processing is described with reference to FIG. 18.

In Step S42, the generation unit 12 acquires the evaluation data set 24 from the model generation apparatus 20, and calculates an index for each walk section by comparing an output and a correct answer of a gait characteristic included in the output-correct answer data table 28. Then, the generation unit 12 generates the index model $M_A$ in which the index calculated for each walk section is associated with the data ID of the walk section or a characteristic amount indicated by the data in the walk section.

Next, in Step S44, the generation unit 12 calculates an accuracy evaluation value of each of update candidate models defined by respective parameter sets, and selects one or more update candidate models the accuracy evaluation value of which is equal to or greater than a predetermined threshold.

Next, in Step S46, for each update candidate model selected in Step S44 above, the generation unit 12 calculates an index based on a correct answer and an output obtained by input of evaluation data to the update candidate model, and generates the index model $M_B$ in a similar manner to the above index model $M_A$.

Next, in Step S48, based on the index model $M_A$ and the index model Ms, the generation unit 12 generates the difference model $M_I$ in which the difference between indices is associated with the data in each walk section. The difference model generation processing then ends.

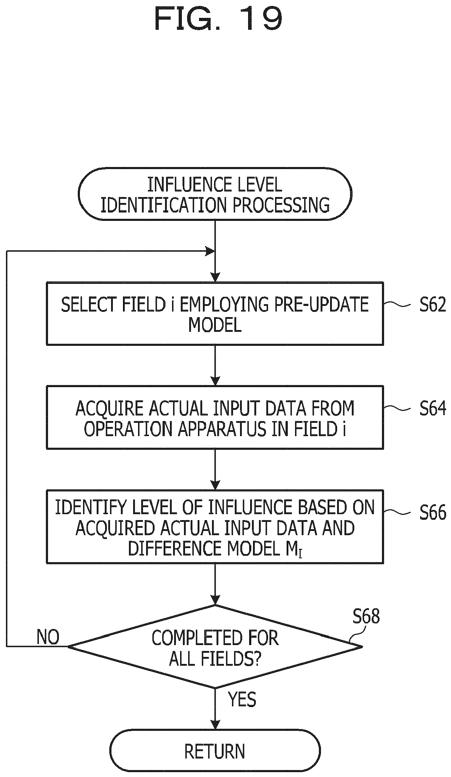

Next, the influence level identification processing is described with reference to FIG. 19.

In Step S62, the identification unit 14 selects a field i employing the pre-update model 38. Next, in Step S64, the identification unit 14 acquires actual input data accumulated in the actual input data DB 39 in the operation apparatus 30 installed in the field i selected.

Next, in Step S66, based on the acquired actual input data and the difference model $M_I$, the identification unit 14 identifies the level of influence $M_I(x_{ij})$ of the j-th actual input data $x_{ij}$ in the field i using, for example, Formula (1) or (2). The identification unit 14 also identifies the total level of influence $I_i$ for the field i using, for example, Formula (3).

Next, in Step S68, the identification unit 14 determines whether the processing for identifying the level of influence has been completed for all the fields employing the pre-update model 38. If there is still a field for which to perform the processing, the processing proceeds back to Step S62, and if the processing has been performed for all the fields, the influence level identification processing ends.

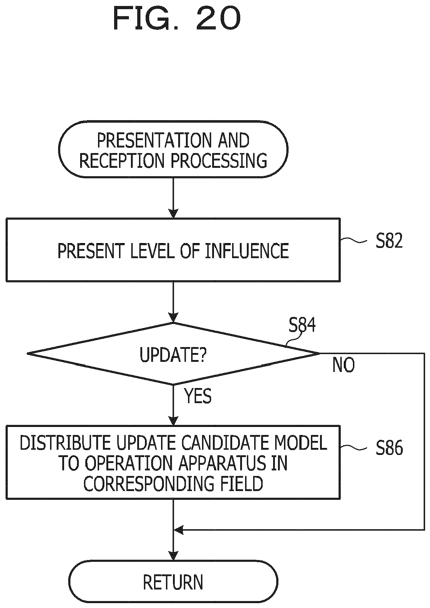

Next, the presentation and reception processing is described with reference to FIG. 20.

In Step S82, the presentation unit 16 presents the level of influence identified by the influence level identification processing (FIG. 19) to a user. The level of influence presented to a user may be a graph plotting the level of influence $M_I(x_{ij})$ of the j-th actual input data $x_{ij}$ in each field against the data ID of the actual input data, the value of the total level of influence $I_i$ in each field, or the like. The presentation unit 16 may also present the total of the levels of influence $I_i$ of the fields employing the same pre-update model 38.

Next, in Step S84, the presentation unit 16 determines whether the presentation unit 16 has received designation of a field to update the model from the user based on the level of influence presented. If designation of a field is received, the processing proceeds to Step S86, and if no designation of a field is received, the presentation and reception processing ends.

In Step S86, the presentation unit 16 distributes the update candidate model to the operation apparatus 30 installed in the field designated, and instructs an update, and the presentation and reception processing ends.

As described above, in the information processing system according to the first embodiment, the model update support apparatus generates a difference model indicating a change in index for an input. A difference model represents the difference between an index regarding an output obtained when evaluation data is inputted to a pre-update model and an index regarding an output obtained when evaluation data is inputted to an update candidate model. Then, based on the difference model and actual input data accumulated in a field using the pre-update model, the model update support apparatus identifies the level of influence to be exerted on the field when the pre-update model is updated with the update candidate model, and presents the level of influence to a user. An influence exerted on each field by model update may thus be identified according to inputs made in the field.

<Second Embodiment

Next, a second embodiment will be described. Configurations of an information processing system according to the second embodiment that are similar to those in the information processing system 100 according to the first embodiment are denoted by the same reference signs and are not described.

As illustrated in FIG. 1, an information processing system 200 according to the second embodiment includes a model update support apparatus 210, a model generation apparatus 20, and a plurality of operation apparatuses 30.

The model update support apparatus 210 functionally includes, as illustrated in FIG. 8, the generation unit 12, an identification unit 214, and the presentation unit 16.

Like the identification unit 14 of the first embodiment, the identification unit 214 identifies the level of influence exerted by model update. If the identified level of influence does not satisfy a predetermined condition, the identification unit 214 identifies the level of influence again for another update candidate model with changed model parameters.

The model update support apparatus 10 may be implemented by, for example, a computer 40 illustrated in FIG. 14. The storage unit 43 of the computer 40 stores a model update support program 250 for causing the computer 40 to function as the model update support apparatus 210. The model update support program 250 has the generation process 52, an identification process 254, and the presentation process 56.

The CPU 41 reads the model update support program 250 from the storage unit 43, loads the model update support program 250 into the memory 42, and executes the processes in the model update support program 250 sequentially. The CPU 41 operates as the identification unit 214 illustrated in FIG. 8 by executing the identification process 254. The other processes are as described in the model update support program 50 in the first embodiment. The computer 40 executing the model update support program 250 thus functions as the model update support apparatus 210.

The functions implemented by the model update support program 250 may also be implemented by, for example, a semiconductor integrated circuit, or more specifically, an ASIC or the like.

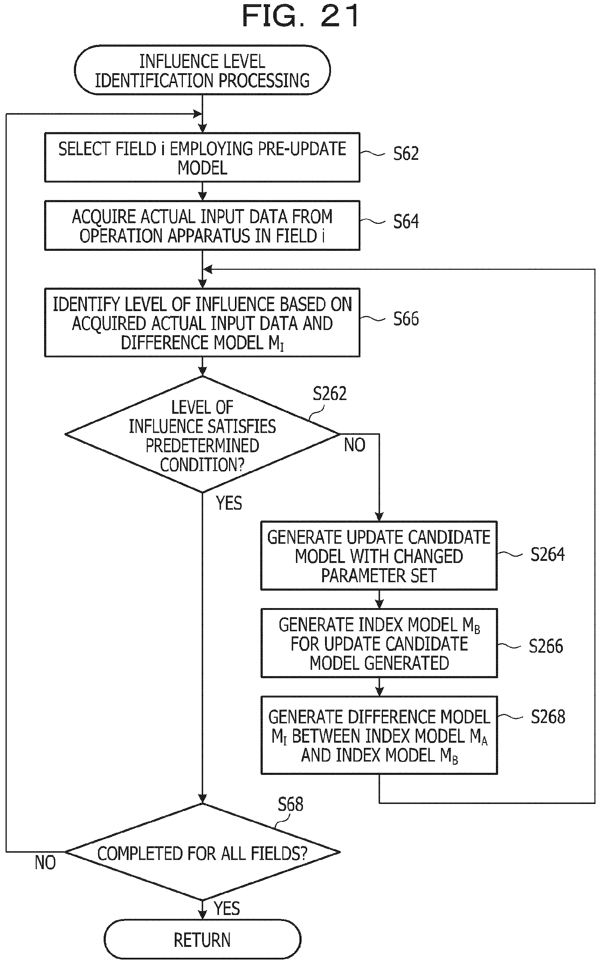

Next, a description is given of how the information processing system 200 according to the second embodiment works. In the second embodiment, the influence level identification processing executed in Step S60 of the model update support processing (FIG. 17) differs from that in the first embodiment. Thus, the influence level identification processing in the second embodiment is described with reference to FIG. 21. Steps in the influence level identification processing according to the second embodiment that are similar to those in the influence level identification processing (FIG. 19) in the first embodiment are denoted by the same reference signs and are not described in detail.

When the level of influence is identified through Steps S62 to S66, in the next Step S262, the identification unit 214 determines whether the level of influence satisfies a predetermined condition. For example, the predetermined condition may be that the total level of influence $I_i$ of each field i is a value within a predetermined range or that the maximum value, the average value, or the like of the levels of influence $M_I(x_{ij})$ of the respective actual input data $x_{ij}$ is a value within a predetermined range. The processing proceeds to Step S68 if the level of influence satisfies the predetermined condition, or proceeds to Step S264 if the level of influence does not satisfy the predetermined condition.

In Step S264, the identification unit 214 changes the parameter set of the update candidate model and generates a new update candidate model.

Next, in Step S266, like in Step S46 in the difference model generation processing (FIG. 18), the identification unit 214 causes the generation unit 12 to generate an index model $M_B$ for the new update candidate model generated in Step S264 above.

Next, in Step S268, the identification unit 214 causes the generation unit 12 to generate a difference model $M_I$ between the index model $M_A$ generated in Step S42 in the difference model generation processing (FIG. 18) and the index model $M_B$ generated in Step S266 above. The processing then proceeds back to Step S66.

As described above, in the information processing system according to the second embodiment, if the level of influence identified does not satisfy a predetermined condition, the model update support apparatus identifies the level of influence again for another update candidate model with changed model parameters. This allows an update candidate model with which a low level of influence is exerted by model update to be presented to a user.

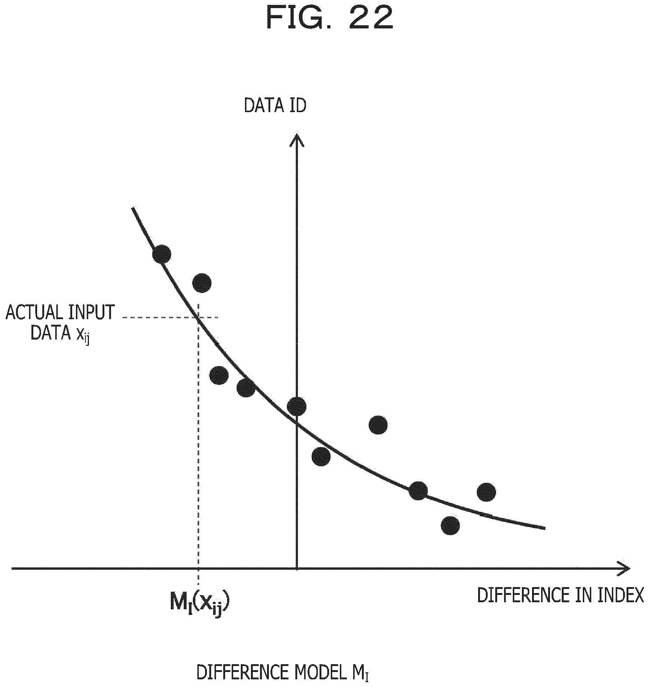

In the above embodiments described above, the level of influence is identified based on the difference in index about evaluation data closest to actual input data. However, the technique disclosed herein is not limited to this case. For example, as illustrated in FIG. 22, the level of influence may be identified based on a difference corresponding to actual input data in the relation between evaluation data and the difference in index indicated by the difference model $M_I$.

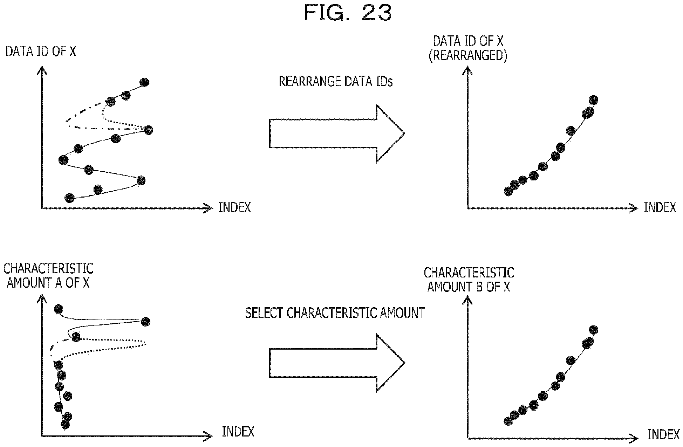

In this case, the relation between evaluation data and the difference in index has to be formulated. However, if, for example, the index models $M_A$ and $M_B$ are generated with data IDs of respective walk sections being arranged in numerical order or in order of size of the characteristic amounts indicated by the data in the respective walk sections, the relations between inputs and indices become complicated, as illustrated in the left graphs in FIG. 23. For example, in a section where pieces of evaluation data are sparse, it is unclear whether one index changes to the next index as depicted by the broken lines or as depicted by the dashed-dotted lines; thus, the difference model $M_I$ may not be generated properly from the index models $M_A$ and $M_B$. In this case, the level of influence may not be identified properly either.

Thus, in order to formulate an index for an input, the data IDs may be rearranged, or the characteristic amount to be used in the index models $M_A$ and $M_B$ may be selected, as illustrated in the right graphs in FIG. 23.

Although the technique disclosed herein is applied to a gait analysis service in the embodiments described above, the technique disclosed herein is not limited to this case.

For example, a basic model for detecting a suspicious individual is created to be used in police boxes all over the country, and a service to which this basic model is applied is operated in police boxes in various districts. It is then assumed here that, for example, there has been a report of error that an individual having a characteristic X of the face being hidden by cold weather protection gear had been detected as a suspicious individual in one district A (for example, Sapporo). There are cases where it is not preferable to update the basic model applied in common to the police boxes all over the country with a model adjusted not to detect the characteristic X as a suspicious individual to address this error.

If individuals with the characteristic X are detected as suspicious individuals in, for example, another district B (for example, Asahikawa) similar to the district A in climate and the like, unnecessary alarms may go off frequently for example, and therefore it is not preferable to detect individuals with the characteristic X in the district B. Thus, the model update is not problematic for the district B. On the other hand, the model update is not preferable for another district C (for example, Naha) different from the district A in climate and the like, where individuals with the characteristic X are to be detected.

Applying the technique disclosed herein to such a case enables the level of influence exerted by model update to be identified for each district based on the difference in actual input data (for example, image data) representing the characteristics of people in each district.

In the embodiments described above, the model update support program is stored (or installed) in the storage unit in advance, but the technique disclosed herein is not limited to this case. The program according to the technique disclosed herein may also be provided in the form of a storage medium storing the program, the storage medium being a compact disc read-only memory (CD-ROM), a Digital Versatile Disc (DVD)-ROM, a Universal Serial Bus (USB) memory, or the like.

**Claims**

1. A model update support method, comprising:

   generating, by a computer, a difference model that represents a difference between a first index regarding an output obtained when evaluation data is inputted to a first model and a second index regarding an output obtained when the evaluation data is inputted to a second model; and
   identifying a level of influence to be exerted by update of the first model with the second model, based on the difference model and input data accumulated in a field where the first model is used.

2. The model update support method according to claim 1, further comprising:

   outputting the level of influence to a display unit; and
   performing the update of the first model with the second model when receiving an update instruction.

3. The model update support method according to claim 1 or 2, further comprising:
   identifying the level of influence based on the difference about the evaluation data closest to the input data.

4. The model update support method according to claim 1 or 2, further comprising:
   identifying the level of influence based on the difference corresponding to the input data in a relation between the evaluation data and the difference, which is indicated by the difference model.

5. The model update support method according to claim 4, further comprising:
   rearranging a plurality of pieces of the evaluation data to allow the relation between the evaluation data and the difference to be formulated.

6. The model update support method according to any one of claims 1 to 5, wherein

   each of the first model and the second model outputs an estimation result corresponding to a characteristic indicated by data inputted thereto, and
   the model update support method further comprises:
   using, as the first index or the second index, an error between an expected value and an output from each of the first model and the second model.

7. The model update support method according to any one of claims 1 to 5, further comprising:

   calculating a risk value based on an output of each of the first model and the second model; and
   using the risk value as the first index or the second index.

8. The model update support method according to any one of claims 1 to 7, further comprising:

generating a first index model in which each piece of the evaluation data is associated with a corresponding index regarding the first model;

generating a second index model in which each piece of the evaluation data is associated with a corresponding index regarding the second model; and

generating the difference model in which each piece of the evaluation data is associated with a difference between the corresponding index regarding the first model and the corresponding index regarding the second model based on the first index model and the second index model.

9. The model update support method according to any one of claims 1 to 8, further comprising:
   when the level of influence identified does not satisfy a predetermined condition, identifying the level of influence again for the second model with a changed parameter.

10. The model update support method according to any one of claims 1 to 9, further comprising:

    presenting the level of influence identified for the input data accumulated in each of a plurality of the fields; and
    receiving, for each of the fields, whether to update the first model with the second model.

11. A model update support apparatus, comprising:

    a generation unit configured to generate a difference model that represents a difference between a first index regarding an output obtained when evaluation data is inputted to a first model and a second index regarding an output obtained when the evaluation data is inputted to a second model; and
    an identification unit configured to identify a level of influence to be exerted by update of the first model with the second model, based on the difference model and input data accumulated in a field where the first model is used.

12. The model update support apparatus according to claim 11, further comprising:
    a presentation unit configured to:

    output the level of influence to a display unit; and
    distribute, upon receiving an update instruction, the second model to perform the update of the first model with the second model.

13. The model update support apparatus according to claim 11 or 12, wherein
    the identification unit is further configured to identify the level of influence based on the difference about the evaluation data closest to the input data.

14. The model update support apparatus according to claim 11 or 12, wherein
    the identification unit is further configured to identify the level of influence based on the difference corresponding to the input data in a relation between the evaluation data and the difference, which is indicated by the difference model.

15. A model update support program that causes a computer to execute a process, the process comprising:

    generating a difference model that represents a difference between a first index regarding an output obtained when evaluation data is inputted to a first model and a second index regarding an output obtained when the evaluation data is inputted to a second model; and
    identifying a level of influence to be exerted by update of the first model with the second model, based on the difference model and input data accumulated in a field where the first model is used.

# FIG. 1

100(200)

20

MODEL
GENERATION
APPARATUS

30

OPERATION
APPARATUS

10(210)

MODEL UPDATE
SUPPORT
APPARATUS

30

OPERATION
APPARATUS

# FIG. 2

20

MODEL GENERATION APPARATUS

22

TRAINING UNIT —————— PRE-UPDATE MODEL

24

EVALUATION DATA SET

FIG. 3

24

26

| DATA ID | DATE AND TIME INFORMATION | SENSOR DATA | | | ... |
| | | X | Y | Z | |
|---|---|---|---|---|---|
| 1 | 2019-09-28T09:00:00.000Z | 182.07 | 128.59 | 141.12 | ... |
| 1 | 2019-09-28T09:00:00.100Z | 162.61 | 103.88 | 172.34 | ... |
| ... | ... | ... | ... | ... | ... |

28

| DATA ID | NUMBER OF FOOTSTEPS | | STRIDE PERIOD | | ... |
| | OUTPUT | CORRECT ANSWER | OUTPUT | CORRECT ANSWER | |
|---|---|---|---|---|---|
| 1 | 10 | 10 | 1.25 | 1.38 | ... |
| 2 | 15 | 15 | 1.02 | 1.04 | ... |
| ... | ... | ... | ... | ... | ... |

# FIG. 4

OPERATION APPARATUS 30

ACTUAL INPUT DATA ——— ACQUISITION UNIT 32 ——— ACTUAL INPUT DATA DB 39

ESTIMATION RESULT (GAIT CHARACTERISTIC) ——— ESTIMATION UNIT 34 ——— DETERMINATION UNIT 36 ——— ERROR DETERMINATION RESULT

PRE-UPDATE MODEL 38

## FIG. 5

DEVELOPMENT STAGE

EVALUATION DATA
$X \longrightarrow$ MODEL M1 $\longrightarrow$ OUTPUT $Y \longleftrightarrow \hat{Y}$ CORRECT ANSWER $=$ ACCURACY EVALUATION VALUE E

OPERATION STAGE (FIELD H)

ACTUAL INPUT DATA
$X' \longrightarrow$ MODEL M1 $\longrightarrow$ OUTPUT $Y' \Longrightarrow$ ERROR DATA $X'e$

S3
PROBLEM IN OPERATION
PROBLEM IN MODEL

(FIELD T)    (FIELD P)    ...

REQUEST        UPDAT ～S4

ADJUSTMENT STAGE

ERROR DATA
$X'e \longrightarrow$ MODEL M2 $\longrightarrow$ OUTPUT $Y'e \longleftrightarrow \widehat{Y'e}$ CORRECT ANSWER $=$ ACCURACY EVALUATION VALUE E'

S2～

S1

D1[X M1 E]    D2[X'e M2 E']  ···

17

FIG. 6

IN DEVELOPMENT    A

CHARACTERISTIC AMOUNT a

EVALUATION DATA X

MODEL M1

CHARACTERISTIC AMOUNT b

IN OPERATION    B

ACTUAL INPUT DATA X'

ERROR DATA X'e

AFTER UPDATE    C

MODEL M2

# FIG. 7

OPERATION STAGE (FIELD H)

ACTUAL INPUT DATA $X'_H$ ⟶ | **38** PRE-UPDATE MODEL (MODEL M1) | ⟶ OUTPUT $Y'_H$

ACTUAL INPUT DATA DB IN FIELD H — 39H

OPERATION STAGE (FIELD T)

ACTUAL INPUT DATA $X'_T$ ⟶ | **38** PRE-UPDATE MODEL (MODEL M1) | ⟶ OUTPUT $Y'_T$

ACTUAL INPUT DATA DB IN FIELD T — 39T

OPERATION STAGE (FIELD P)

ACTUAL INPUT DATA $X'_P$ ⟶ | **38** PRE-UPDATE MODEL (MODEL M1) | ⟶ OUTPUT $Y'_P$

ACTUAL INPUT DATA DB IN FIELD P — 39P

# FIG. 8

10(210)

MODEL UPDATE SUPPORT APPARATUS

EVALUATION DATA
SET

12

GENERATION UNIT

ACTUAL INPUT
DATA

14(214)

IDENTIFICATION UNIT

UPDATE
INSTRUCTION

16

PRESENTATION UNIT

LEVEL OF INFLUENCE

# FIG. 9

EVALUATION DATA :
SENSOR DATA IN
WALK SECTION

PARAMETER SET :P1

OUTPUT :
GAIT CHARACTERISTIC

CORRECT ANSWER :
GAIT CHARACTERISTIC

PRE-UPDATE MODEL
(MODEL M1)

NUMBER OF FOOTSTEPS : 10
STRIDE PERIOD :1.25
. . .

NUMBER OF FOOTSTEPS : 10
STRIDE PERIOD :1.38
. . .

CALCULATE INDEX

DATA ID

INDEX MODEL $M_A$

ABNORMAL GAIT
(SHORT STRIDE)

NORMAL GAIT
(LONG STRIDE)

INDEX

# FIG. 10

INDEX MODEL $M_B$        INDEX MODEL $M_A$

DIFFERENCE MODEL $M_I = M_B - M_A$

DATA ID

SMALL INFLUENCE ← A

LARGE INFLUENCE ← B

DIFFERENCE IN INDEX

FIG. 11

# FIG. 12

18

Dashboard

| OVERALL | EACH FIELD |

HOME
STATUS
UPDATE
**LEVEL OF INFLUENCE**

SETTINGS

IF MODEL M1 IS UPDATED WITH MODEL M2

40.4

10.1

5.2

2.3

5.5

FIELD   H      T      P      Q      W

# FIG. 13

18

| Dashboard | | OVERALL | EACH FIELD |

Dashboard

HOME
STATUS
UPDATE
**LEVEL OF INFLUENCE**

SETTINGS

OVERALL | EACH FIELD

IF MODEL M1 IS UPDATED WITH MODEL M2

# 12.7 %

LEVEL OF INFLUENCE OF EACH UPDATE CANDIDATE MODEL

| MODEL | M1 | **M2** | M3 | ... |
|---|---|---|---|---|
| LEVEL OF INFLUENCE | 0 | **12.7** | 64.3 | ... |

SELECTED

# FIG. 14

CPU 41

INPUT/OUTPUT DEVICE 44

R/W UNIT 45

49

COMMUNICATION I/F 46

40

47

**STORAGE UNIT** 50(250)

MODEL UPDATE SUPPORT PROGRAM

GENERATION PROCESS — 52

IDENTIFICATION PROCESS — 54 (254)

PRESENTATION PROCESS — 56

43

**MEMORY**

42

# FIG. 15

```
         ┌─────────────────────────┐
         │   MODEL GENERATION      │
         │      PROCESSING         │
         └─────────────────────────┘
                     │
                     ▼
   ┌─────────────────────────────────┐
   │   GENERATE MODEL BY LEARNING    │ ~ S12
   │  PARAMETERS USING EVALUATION DATA│
   │              SET                │
   └─────────────────────────────────┘
                     │
                     ▼
   ┌─────────────────────────────────┐
   │   STORE VALUE OF OUTPUT IN OUTPUT-│ ~ S14
   │   CORRECT ANSWER DATA TABLE     │
   └─────────────────────────────────┘
                     │
                     ▼
   ┌─────────────────────────────────┐
   │  DISTRIBUTE GENERATED PRE-UPDATE │ ~ S16
   │ MODEL TO EACH OPERATION APPARATUS│
   └─────────────────────────────────┘
                     │
                     ▼
         ┌─────────────────────────┐
         │          END            │
         └─────────────────────────┘
```

# FIG. 16

```
        ( OPERATION PROCESSING )
                    │
                    ▼
   ┌────────────────────────────┐
   │                            │ ~ S22
   │  ACQUIRE ACTUAL INPUT DATA │
   │                            │
   └────────────────────────────┘
                    │
                    ▼
   ┌────────────────────────────┐
   │                            │ ~ S24
   │ ACCUMULATE ACTUAL INPUT DATA│
   │                            │
   └────────────────────────────┘
                    │
                    ▼
   ┌────────────────────────────┐
   │ INPUT ACTUAL INPUT DATA TO PRE- │ ~ S26
   │  UPDATE MODEL AND OUTPUT GAIT   │
   │        CHARACTERISTIC           │
   └────────────────────────────┘
                    │
                    ▼
              ◇ S28
   NO      ESTIMATION RESULT
           IS ERROR?
                    │ YES
                    ▼
   ┌────────────────────────────┐
   │ NOTIFY MODEL UPDATE SUPPORT │ ~ S30
   │         APPARATUS           │
   └────────────────────────────┘
                    │
                    ▼
                ( END )
```

# FIG. 17

```
        ╭─────────────────────╮
        │    MODEL UPDATE      │
        │ SUPPORT PROCESSING   │
        ╰─────────────────────╯
                  │
                  ▼
   ┌──────────────────────────────┐
   │  DIFFERENCE MODEL GENERATION  │ ～ S40
   │         PROCESSING            │
   └──────────────────────────────┘
                  │
                  ▼
   ┌──────────────────────────────┐
   │  INFLUENCE LEVEL IDENTIFICATION │ ～ S60
   │         PROCESSING            │
   └──────────────────────────────┘
                  │
                  ▼
   ┌──────────────────────────────┐
   │  PRESENTATION AND RECEPTION   │ ～ S80
   │         PROCESSING            │
   └──────────────────────────────┘
                  │
                  ▼
           ╭──────────────╮
           │     END      │
           ╰──────────────╯
```

# FIG. 18

```
        ╭─────────────────────────╮
        │   DIFFERENCE MODEL      │
        │ GENERATION PROCESSING   │
        ╰─────────────────────────╯
                    │
                    ▼
   ┌──────────────────────────────────┐
   │ GENERATE INDEX MODEL Mₐ FOR PRE- │──  S42
   │           UPDATE MODEL           │
   └──────────────────────────────────┘
                    │
                    ▼
   ┌──────────────────────────────────┐
   │ EVALUATE UPDATE CANDIDATE MODELS │──  S44
   │ FOR EACH PARAMETER SET AND SELECT│
   │           ONE OR MORE            │
   └──────────────────────────────────┘
                    │
                    ▼
   ┌──────────────────────────────────┐
   │ GENERATE INDEX MODEL M_B FOR UPDATE │── S46
   │    CANDIDATE MODEL SELECTED      │
   └──────────────────────────────────┘
                    │
                    ▼
   ┌──────────────────────────────────┐
   │  GENERATE DIFFERENCE MODEL M_I   │── S48
   │ BETWEEN INDEX MODEL Mₐ AND INDEX │
   │            MODEL M_B             │
   └──────────────────────────────────┘
                    │
                    ▼
           ╭─────────────────╮
           │     RETURN      │
           ╰─────────────────╯
```

# FIG. 19

```
        ┌──────────────────────────────┐
        │      INFLUENCE LEVEL         │
        │  IDENTIFICATION PROCESSING   │
        └──────────────────────────────┘
                      │
    ┌────────────────►│
    │                 ▼
    │   ┌──────────────────────────────────┐
    │   │ SELECT FIELD i EMPLOYING PRE-UPDATE │  ∽ S62
    │   │            MODEL                    │
    │   └──────────────────────────────────┘
    │                 │
    │                 ▼
    │   ┌──────────────────────────────────┐
    │   │ ACQUIRE ACTUAL INPUT DATA FROM    │  ∽ S64
    │   │ OPERATION APPARATUS IN FIELD i    │
    │   └──────────────────────────────────┘
    │                 │
    │                 ▼
    │   ┌──────────────────────────────────┐
    │   │ IDENTIFY LEVEL OF INFLUENCE BASED ON │ ∽ S66
    │   │ ACQUIRED ACTUAL INPUT DATA AND    │
    │   │        DIFFERENCE MODEL M_I        │
    │   └──────────────────────────────────┘
    │                 │
    │                 ▼
    │            ╱◇╲              S68
    │   NO     ╱ COMPLETED FOR ╲ ∽
    └────────◇   ALL FIELDS?    ◇
              ╲               ╱
                ╲◇╱
                 │ YES
                 ▼
        ┌──────────────────┐
        │      RETURN      │
        └──────────────────┘
```

31

# FIG. 20

```
┌─────────────────────────┐
│  PRESENTATION AND       │
│  RECEPTION PROCESSING   │
└─────────────────────────┘
            │
            ▼
┌─────────────────────────────────┐
│  PRESENT LEVEL OF INFLUENCE     │──── S82
└─────────────────────────────────┘
            │
            ▼
         ╱─────────╲                  S84
        ╱           ╲
       ╱   UPDATE?   ╲──────────── NO ──┐
        ╲           ╱                    │
         ╲─────────╱                     │
            │ YES                        │
            ▼                            │
┌─────────────────────────────────┐     │
│ DISTRIBUTE UPDATE CANDIDATE MODEL│──── S86
│ TO OPERATION APPARATUS IN        │     │
│ CORRESPONDING FIELD              │     │
└─────────────────────────────────┘     │
            │◄───────────────────────────┘
            ▼
┌─────────────────────────┐
│        RETURN           │
└─────────────────────────┘
```

# FIG. 21

```
        ( INFLUENCE LEVEL
     IDENTIFICATION PROCESSING )
                  │
                  ▼
   ┌──────────────────────────────┐
   │ SELECT FIELD i EMPLOYING      │── S62
   │ PRE-UPDATE MODEL              │
   └──────────────────────────────┘
                  │
                  ▼
   ┌──────────────────────────────┐
   │ ACQUIRE ACTUAL INPUT DATA FROM│── S64
   │ OPERATION APPARATUS IN FIELD i│
   └──────────────────────────────┘
                  │
                  ▼
   ┌──────────────────────────────┐
   │ IDENTIFY LEVEL OF INFLUENCE   │── S66
   │ BASED ON ACQUIRED ACTUAL INPUT│
   │ DATA AND DIFFERENCE MODEL M_I │
   └──────────────────────────────┘
                  │
                  ▼
            LEVEL OF                    S262
         INFLUENCE SATISFIES
          PREDETERMINED         ── NO ──────────┐
           CONDITION?                           │
                  │ YES                          ▼
                  │            ┌──────────────────────────────┐
                  │            │ GENERATE UPDATE CANDIDATE     │── S264
                  │            │ MODEL WITH CHANGED            │
                  │            │ PARAMETER SET                 │
                  │            └──────────────────────────────┘
                  │                           │
                  │                           ▼
                  │            ┌──────────────────────────────┐
                  │            │ GENERATE INDEX MODEL M_B      │── S266
                  │            │ FOR UPDATE CANDIDATE          │
                  │            │ MODEL GENERATED               │
                  │            └──────────────────────────────┘
                  │                           │
                  │                           ▼
                  │            ┌──────────────────────────────┐
                  │            │ GENERATE DIFFERENCE MODEL     │── S268
                  │            │ M_I BETWEEN INDEX MODEL M_A   │
                  │            │ AND INDEX MODEL M_B           │
                  │            └──────────────────────────────┘
                  ▼                           │
            COMPLETED FOR ALL FIELDS?   S68    
         NO ──┘          │
                         │ YES
                         ▼
                   ( RETURN )
```

# FIG. 22

DATA ID

ACTUAL INPUT
DATA $x_{ij}$

$M_I(x_{ij})$

DIFFERENCE IN INDEX

DIFFERENCE MODEL $M_I$

# FIG. 23

DATA ID OF X

DATA ID OF X
(REARRANGED)

REARRANGE DATA IDs

INDEX

INDEX

CHARACTERISTIC
AMOUNT A OF X

CHARACTERISTIC
AMOUNT B OF X

SELECT CHARACTERISTIC AMOUNT

INDEX

INDEX

Europäisches
Patentamt

European
Patent Office

Office européen
des brevets

# EUROPEAN SEARCH REPORT

Application Number

EP 21 15 4526

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Parisi German I: "Human Action Recognition and Assessment via Deep Neural Network Self-Organization", <br><br>, <br>16 February 2020 (2020-02-16), <br>XP055819851, <br>Retrieved from the Internet: <br>URL:https://arxiv.org/pdf/2001.05837.pdf <br>[retrieved on 2021-06-30] <br>* abstract * <br>* page 3 - page 14; figures 7, 8; tables 2, 3 * <br>----- | 1-15 | INV. <br>G06N20/00 |
| A | WEBER CHRISTIAN ET AL: "A New Process Model for the Comprehensive Management of Machine Learning Models :", <br>PROCEEDINGS OF THE 21ST INTERNATIONAL CONFERENCE ON ENTERPRISE INFORMATION SYSTEMS, <br>3 May 2019 (2019-05-03), pages 415-422, <br>XP055819632, <br>DOI: 10.5220/0007725304150422 <br>ISBN: 978-989-7583-72-8 <br>* the whole document * <br>----- | 1-15 | |
| A | Corinna Cortes ET AL: "AdaNet: Adaptive Structural Learning of Artificial Neural Networks", <br><br>, <br>28 February 2017 (2017-02-28), <br>XP055494110, <br>Retrieved from the Internet: <br>URL:https://arxiv.org/pdf/1607.01097.pdf <br>[retrieved on 2018-07-20] <br>* the whole document * <br>----- | 1-15 | TECHNICAL FIELDS SEARCHED (IPC) <br><br>G06N |

The present search report has been drawn up for all claims

| Place of search | Date of completion of the search | Examiner |
|---|---|---|
| The Hague | 1 July 2021 | Tsakonas, Athanasios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2016151618 A

### Non-patent literature cited in the description

- **NISHA TALAGALA.** Why MLOps (and not just ML) is your Business' New Competitive Frontier. *AITrends,* 30 January 2018, https://www.aitrends.com/machine-learning/mlops-not-just-ml-business-new-competitive-frontier
- **D. PETROV.** *Data Science Version Control System,* 2018, http://dvc.org
- **H. YOKOYAMA.** Machine Learning System Architectural Pattern for Improving Operational Stability. *IEEE International Conference on Software Architecture Companion (ICSA-C),* 2019